# EUROPEAN PATENT SPECIFICATION

(11) **EP 0 297 704 B1**
(45) Date of publication and mention of the grant of the patent: **25.08.1993**
(21) Application number: 88303789.7
(22) Date of filing: 27.04.1988
(51) Int. Cl.: A47J 31/06, A47J 31/057

(54) **Beverage brewing apparatus**
Gerät zum Zubereiten von warmen Getränken
Appareil pour la préparation de boissons chaudes

(30) Priority: 03.07.1987 GB 8715666
(43) Date of publication of application: 04.01.1989
(73) Proprietor: The Hobart Manufacturing Company Ltd., London N4 6RT (GB)
(72) Inventor: Snowball, Malcolm Robert, St. Leonards-on-Sea East Sussex (GB); Hayes, Cecil, Hastings East Sussex (GB)
(74) Representative: Allen, Oliver John Richard

(56) References cited:
- EP-A- 0 227 200
- DE-A- 3 213 784
- FR-A- 2 282 838
- GB-A- 2 134 376

## Description

This invention relates to beverage brewing apparatus.

Hitherto it has not been possible to produce high quality tea beverage in apparatus similar to a coffee brewer, in which hot water is poured over a bed of tea leaves, primarily, it is believed, because either the hot water does not remain in contact with the tea leaves for a sufficient time or the tea is allowed to brew for too long so that it acquires a 'stewed' taste.

The general object of the invention is, therefore, to enable tea making apparatus to be produced or a coffee brewer adapted so as to be able to make reasonable quality tea beverage.

EP-A-227200 discloses tea making apparatus comprising means for supplying heated water over a device for holding a bed of tea leaves and an outlet passage from the bed including a syphon tube which is provided to delay the passage of hot water from the tea leaf bed for a period of time in excess of one minute during which hot water is in contact with the tea leaves before the tea beverage is discharged for drinking.

GB 2134376 relates to a filter device for making tea comprising a filter vessel with syphoning means having capillary inlet channels for the discharge of tea brewed in the filter vessel.

Beverage brewing apparatus in accordance with this invention comprises means for supplying heated water over a device (e.g. a basket) for holding a bed of tea leaves (or coffee) and an outlet passage from the base of the holding device including a syphon tube which is provided to delay the passage of hot water from the holding device for a brewing period which lasts as and until the hot water reaches a predetermined lever in the holding device at which the syphon starts enabling the brewed liquor to be dispensed through the outlet passage, characterised in that at least part of the inlet arm of the syphon tube has a roughened inner surface acting in use to maintain droplets of brewed liquor therein and acting, following discharge of the brew from the holding device, to aid the start of a second syphon discharge of accumulated brewing liquor from the holding device when its level therein has again risen above the level necessary to start the syphon operating.

The brewing time is long enough to give a good extraction of tea flavour from the leaves into the hot water without the tea becoming 'stewed' and it thus provides tea of highly acceptable quality.

Preferably, the brew time is at least one minute and may be more than two minutes. The syphon tube serves to delay the passage of water through the bed, and its inlet may be located below, but closely adjacent to, the bottom surface of the tea leaf bed and adjacent the bottom of the holding device surrounding a basket for holding the bed, the tube extending up to a position near the top of the bed of leaves and then bending over and extending downwardly so that its outlet is below its inlet and extends through the bottom of the receptacle. The arrangement is such that as hot water reaches the tea bed it is held in the receptacle and cannot discharge until its level within the receptacle has risen to the height of the syphon tube bend well above the bottom of the bed. The water saturating the bed is thus maintained in contact with the tea leaves until the water level reaches the top of the syphon tube. All the water is then discharged through the syphon tube after passing through the bed at a rate which exceeds the rate of hot water supply. It is possible to arrange the height and diameter of the syphon tube and the rate of introduction of hot water so that contact time of water on the leaves is at least one minute.

To maintain the brew liquid level and hence, the soak (or brew) of the tea leaves, the arrangement is preferably such that the relationship between the water inflow and the water outflow is determined by the choice of the discharge pipe (syphon tube) diameter.

Preferably the syphon tube bend is about 58 to 68 mm above the tube outlet and the tube diameter is about 6 to 8 mm.

During discharge, the tea leaves are retained in their bed and virtually all of the brewed beverage is discharged from the bottom of the bed through and out from, the syphon tube.

The inner surface of the inlet arm of the syphon tube is adapted to retain small droplets of brewed tea. This may be achieved by providing the inlet arm with a roughened inner surface, for example, either by sand blasting or acid etching.

In use, when the receptacle is filled to the top of the bend in the syphon tube, the brewed tea is syphoned out at a rate which exceeds the rate of the incoming hot water. Thus the receptacle empties and the syphon is broken.

However, the roughened inner surface of the inlet arm of the syphon causes droplets of tea to be retained inside the tube following discharge of the brew from the tea leaf bed. Subsequently, as hot water continues to fall on the tea leaves, the inlet of the syphon once again becomes covered with liquid and pressure builds up within the inlet arm to drive the droplets over the top of the syphon tube bend and thus initiate a secondary syphon. The syphon stops when the liquid level again falls below the level of the tube outlet. The level the liquid must reach before the secondary syphon commences depends upon the position of the droplets within the inlet arm. The nearer the droplets to the top of the inlet arm and hence the bend, the quicker sufficient pressure will build up for the secondary syphon to start. Thus, while hot water is supplied the syphon continually makes and breaks until the infusion is completely finished. In this way, oversoaking of the tea leaves is avoided once the initial brewing period is finished.

A filter paper is normally provided within a basket to receive the bed of tea leaves.

An outer housing is preferably provided to surround the hot water receptacle to provide double skin thermal insulation to minimise cooling of the beverage during brewing.

The syphon tube is preferably arranged between the receptacle holding the brewed tea before discharge through the bed and the outer housing. Thus the tea beverage is not cooled quickly during its discharge through the tube as the tube is heated to some extent by the liquor within the receptacle and due to the double insulation effect between the receptacle and the outer housing.

It will be appreciated that the apparatus could be used either for making tea or coffee depending upon the substance present in the bed. Tea bags may be used as well as tea leaves or if coffee is to be produced this may either be ground coffee or instant coffee.

The invention will now be further described by way of example with reference to the accompanying drawings in which:-
Figure 1 is a diagrammatic view of a part of a standard coffee brewer modified in accordance with this invention for the production of tea beverage.
Figure 2 is a view to an enlarged scale of part of the apparatus shown in Figure 1.
Figure 3 is a view corresponding to Figure 2 in which tea is shown discharging from the tea leaf bed.
Figure 4 is a section through a modified embodiment of the unit shown in Figure 2.
Figure 5 is a plan view corresponding to Figure 4.
Figure 6a is a view as in Figure 3, where the hot water has reached the top of the syphon bend and the brew is discharged.
Figure 6b is a view as in Figure 3, showing droplets of tea remaining within the syphon tube, following discharge of the brew and Figure 6c is a view as in Figure 3 showing the secondary syphoning effect.

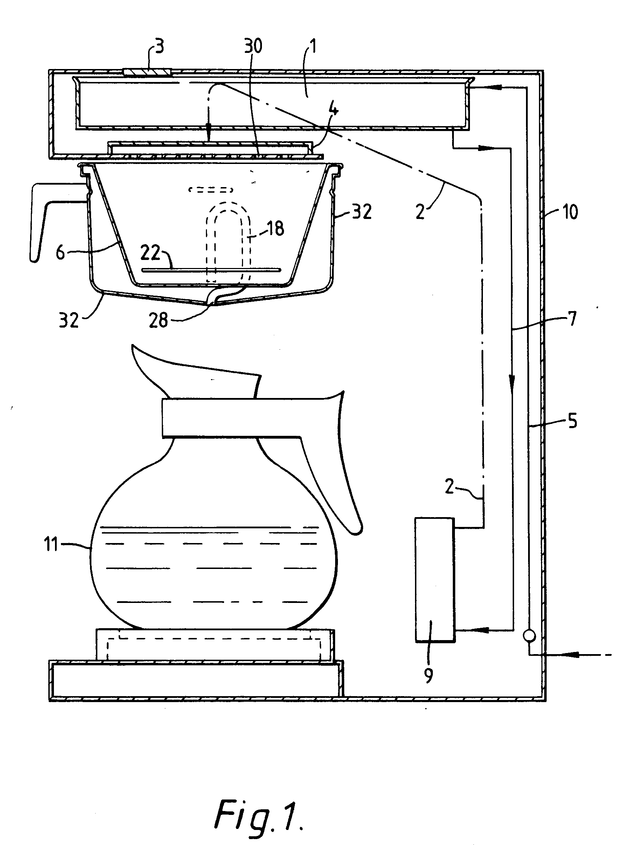

Figure 1 shows generally a standard coffee brewing apparatus which has been modified for the production of tea. The apparatus essentially comprises a housing 10 incorporating a tank 1 for containing cold water supplied to it either manually through an inlet 3 or from the mains through a pipe 5. When it is desired to produce liquor from the apparatus, water is discharged from the tank 1 through a pipe or conduit 7 to a heater 9 which is energised rapidly to increase the temperature of the water to boiling point. The heater 9 is connected through a conduit 2 shown in dot and dash lines to a spray head 4, hot water emerging through outlet holes 30 on to tea leaves contained within a removable receptacle 6 as described hereafter.

After passing through the bed of tea leaves, tea liquor emerges through an outlet 28 as described hereafter to be received in a removable jug or the like 11.

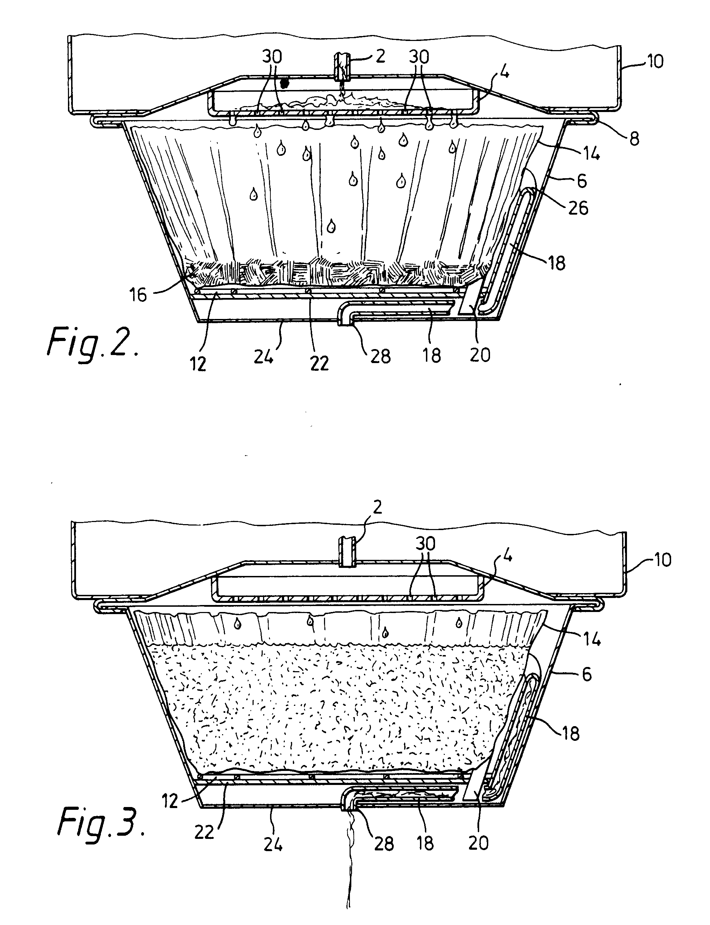

Referring to Figure 2 the receptacle 6 may be slid out from the housing 10 and a basket 12 mounted therein may be provided with a filter paper 14 to carry tea leaves to form a tea leaf bed 16.

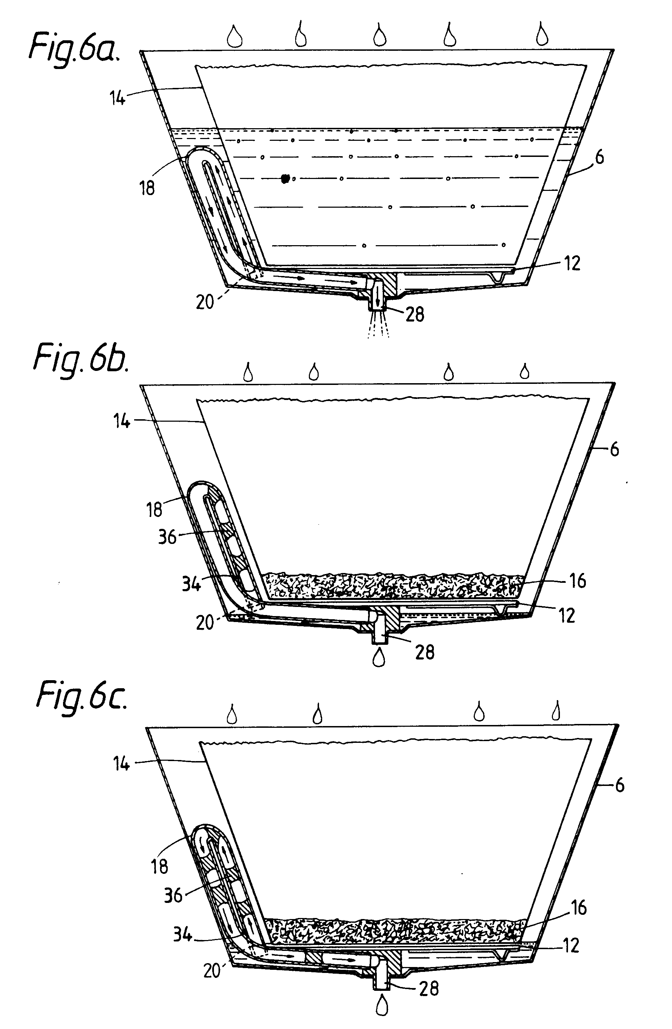

A syphon tube 18 extends upwardly from an inlet 20, positioned just below a base plate 22 supporting the filter paper and adjacent the bottom wall 24 of the receptacle 6. The syphon tube 18 then extends upwardly between the filter paper 14 and the inner wall of the receptacle 6 to a point 26 where it bends over and descends downwardly again within the wall of the receptacle 6 to an outlet 28 below the inlet 20 and extending through the bottom wall 24 of the receptacle 6. As shown in Figure 6b, the inlet arm of the syphon tube 18 is provided with a roughened or ridged inner surface 34.

In use, hot water falls on to the bed of tea leaves 16 as illustrated in Figure 2 in the form of droplets through holes 30 in the spray head 4. These drops fall on the bed of tea leaves 16 and after passage through the bed accumulate on the base 24 of the receptacle. This continues until the water in the receptacle 6 saturates the bed and reaches the level of the bend 26 in the syphon tube. At this moment in time (see Figure 6a) the bed of tea leaves is flooded with water as is the space in the receptacle below the bed of tea leaves. The rate of supply of hot water droplets on to the tea leaves and the height of the syphon tube 18 are made such that the water on average, is in contact with the bed of tea leaves for at least one minute, so as to ensure good extraction of flavour.

Equally the rate of inflow of hot water relative to the rate of outflow through the syphon tube is such that a standard brew or soak time is maintained during the period in which water is sprayed onto the bed. Subsequently, the brewed tea is all exhausted from the bed.

As shown in Figure 6a, once the water level has reached the bend 26 in the syphon tube it falls over the top of the tube and sets up the self-priming syphon to be discharged through outlet 28 in the form of tea beverage. This syphon action continues until virtually all the water in the tea bed and in the receptacle has been discharged and the situation is that shown in Figure 6b. After the brewed tea has been discharged, a few droplets of tea 36 remain within the inlet arm of the syphon tube 18 due to the roughened inner surface 34. As hot water continues to be supplied to the tea leaf bed 16, a small amount of brewed tea accumulates in the bottom of the receptacle 6 until it covers the inlet 20 of the syphon tube 18 as shown in Figure 6c. When this occurs, pressure builds up within the inlet arm to drive the droplets 36 over the syphon bend and hence aids the start of the secondary syphon which sucks the accumulated tea through the tube 18 to the outlet 28. Since the syphon height and tube diameter is arranged so as to discharge brewed tea at a rate which exceeds the inflow of hot water, the syphon breaks again as soon as the level of accumulated tea falls below the inlet 20 of the syphon 18. However, it will restart when the tea level rises above the inlet 20 an addition of further hot water. Thus the syphon continuously makes and breaks until the infusion is completely finished ensuring that subsequent to the initial brew the water does not oversoak the tea leaves.

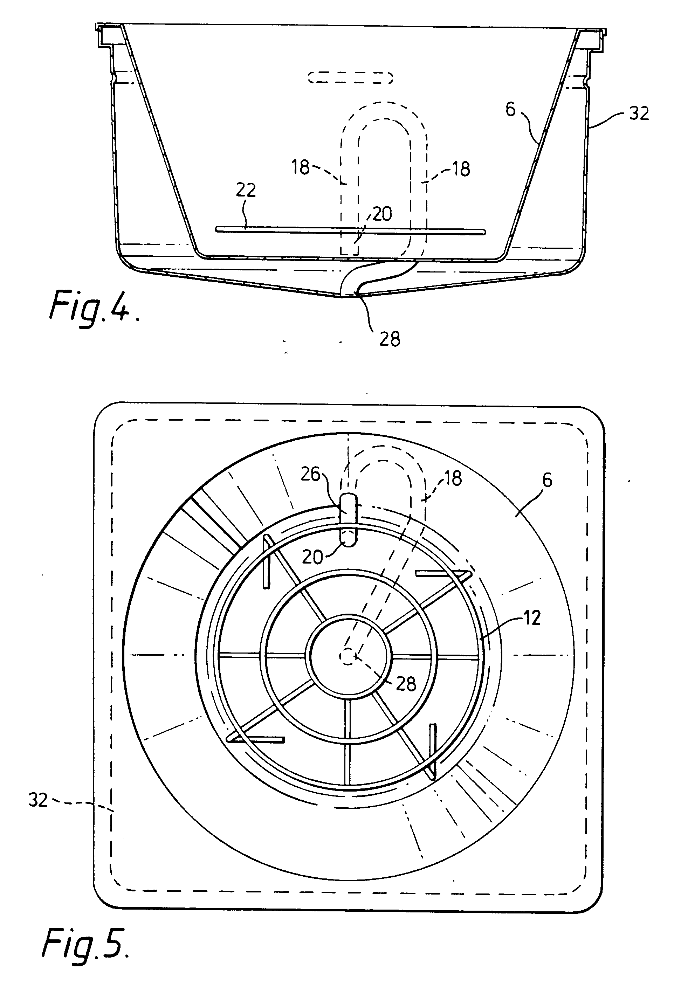

Referring now back to Figures 1 and 4 the inner receptacle 6 is conveniently mounted within an outer housing 32 to give double skin thermal insulation, the discharge outlet 28 of the syphon tube being through the bottom surface of the outer vessel 32. The tube inlet 20 is at the bottom of the inner receptacle so that virtually all tea liquor is discharged from the apparatus through the syphon tube.

As the syphon tube is located within the space between the inner receptacle 6 and the outer housing 32, it is heated by the hot liquor in the receptacle and when the syphon action commences, tea beverage being discharged through the tube is not unduly cooled.

## Claims

1. Beverage brewing apparatus comprising means for supplying heated water over a device for holding a bed of tea leaves (or coffee) and an outlet passage from the base of the holding device including a syphon tube which is provided to delay the passage of hot water from the holding device for a brewing period which lasts as and until the hot water reaches a predetermined level in the holding device at which the syphon starts enabling the brewed liquor to be dispensed through the outlet passage, characterised in that at least part of the inlet arm of the syphon tube has a roughened inner surface acting in use to maintain droplets of brewed liquor therein and acting, following discharge of the brew from the holding device, to aid the start of a second syphon discharge of accumulated brewed liquor for the holding device when its level has again risen above the level necessary to start the syphon operating.

2. Apparatus as claimed in Claim 1 wherein the syphon tube is so dimensioned that the hot water after discharge over the tea leaves is maintained in the holding device so as to "brew" for at least one minute.

3. Apparatus as claimed in either Claim 1 or 2 wherein the syphon tube has its inlet located below, but closely adjacent to, the bottom surface of the tea leaf bed and adjacent the bottom of the holding devices, the tube extending up to a position near the top of a normal bed of leaves held on the basket and then bending over and extending downwardly so that its outlet is below its inlet.

4. Apparatus as claimed in any of the preceding claims in which the syphon tube diameter is chosen relative to the water inlet so that the outflow from the holding device is greater than the inflow.

5. Apparatus as claimed in any one of the preceding claims wherein the roughened inner surface of the syphon tube is provided by sand blasting, acid etching or the like.

6. Apparatus as claimed in any of the preceding claims wherein an outer vessel is provided to surround the holding device which itself surrounds the tea leaf bed, to provide double heat insulation to minimise cooling of the tea bed leaves during brewing.

7. Apparatus as claimed in Claim 6 wherein the syphon tube is arranged between the receptacle holding the hot brewed liquor before discharge and the outer vessel so that the liquor is not unduly cooled during its discharge through the syphon tube, the tube being heated to some extent by the hot liquor within the receptacle and the heat being retained due to the double insulation effect between the receptacle and the outer vessel.

## Patentansprüche

1. Vorrichtung zum Zubereiten von warmen Getränken mit Mitteln zum Zuführen von erhitztem Wasser über eine Einrichtung zum Halten eines Betts aus Teesatz (oder Kaffee), und einer Auslaßpassage von der Grundfläche der Halteeinrichtung, die ein Heberohr enthält, das vorgesehen ist, um die Passage des heißen Wassers von der Halteeinrichtung für einen Zubereitungszeitraum zu verzögern, der solange dauert, bis das heiße Wasser ein vorbestimmtes Level in der Halteeinrichtung erreicht, bei dem der Ansaugheber anfängt, der zubereiteten Flüssigkeit zu gestatten, durch die Auslaßpassage verteilt zu werden,
dadurch gekennzeichnet,
daß mindestens ein Teil des Einlaßarms des Heberohres eine aufgerauhte innere Oberfläche aufweist, welche bei Verwendung derart agiert, daß sie Tropfen der zubereiteten Flüssigkeit darin bewahrt und die nach dem Ausströmen der zubereiteten Flüssigkeit aus der Halteeinrichtung agiert, um den Beginn einer zweiten Entladung des Ansaughebers von angesammelter zubereiteter Flüssigkeit für die Halteeinrichtung zu unterstützen, wenn sein Level wieder über den zum Starten des Ansaugheberbetriebs notwendigen Level gestiegen ist.

2. Vorrichtung nach Anspruch 1, worin das Heberohr derart dimensioniert ist, daß das heiße Wasser nach seinem Ausfluß über den Teesatz in der Halteeinrichtung zurückgehalten wird, um für mindestens eine Minute "zuzubereiten".

3. Vorrichtung nach Anspruch 1 oder 2, worin der Einlaß des Heberohres unterhalb, aber direkt benachbart zur Bodenoberfläche des Teesatzbettes und benachbart zum Boden der Halteeinrichtung angeordnet ist, wobei sich das Rohr nach oben bis zu einer Position in der Nähe des oberen Bereichs eines normalen Bettes aus (Tee-)satz, welcher im Korb gehalten wird, erstreckt und sich dann umbiegt und nach unten erstreckt, so daß sein Auslaß unter seinem Einlaß liegt.

4. Vorrichtung nach einem der vorhergehenden Ansprüche, in welcher der Durchmesser des Heberohres relativ zum Wassereinlaß ausgewählt wird, so daß der Ausfluß aus der Halteeinrichtung größer als der Hineinfluß ist.

5. Vorrichtung nach einem der vorhergehenden Ansprüche, worin die aufgerauhte innere Oberfläche des Heberohres durch Sandbestrahlung, Säureätzung oder dergleichen geschaffen wird.

6. Vorrichtung nach einem der vorhergehenden Ansprüche, worin ein äußeres Gefäß vorgesehen ist, um die Halteeinrichtung zu umgeben, welche ihrerseits das Teesatzbett umgibt, wodurch zur Minimierung der Kühlung des Teesatzbettes während der Zubereitung eine doppelte Wärmeisolation geschaffen wird.

7. Vorrichtung nach Anspruch 6, worin das Heberohr zwischen dem Aufnahmebehälter, welcher die heiße zubereitete Flüssigkeit vor dem Ausströmen beinhaltet, und dem äußeren Behälter angeordnet ist, so daß die Flüssigkeit während ihres Ausströmens durch das Heberohr nicht übermäßig gekühlt wird, und das Rohr durch die heiße Flüssigkeit im Aufnahmebehälter und die Hitze, welche herrührend von dem doppelten Isoliereffekt zwischen dem Aufnahmebehälter und dem äußeren Gefäß zurückgehalten wird, um einiges erwärmt wird.

## Revendications

1. Appareil de préparation de boissons chaudes comprenant un moyen pour fournir de l'eau chaude à un dispositif contenant un lit de feuilles de thé (ou du café) et un passage de sortie partant de la base du dispositif de rétention, comportant un tube à siphon qui est prévu pour retarder le passage de l'eau chaude provenant du dispositif de rétention pendant un temps d'infusion qui se prolonge jusqu'à ce que l'eau chaude atteigne un niveau prédéterminé dans le dispositif de rétention, niveau auquel le siphon s'amorce et permet l'expulsion du liquide infusé par le passage de sortie, caractérisé en ce qu'au moins une partie du bras d'entrée du tube à siphon présente une surface intérieure rugueuse ayant pour effet de maintenir des gouttelettes de liquide infusé dans celui-ci et, après expulsion de l'infusion provenant du dispositif de rétention, de favoriser le déclenchement d'une expulsion par un second siphon du liquide infusé s'étant accumulé dans le dispositif de rétention, lorsque son niveau a de nouveau dépassé le niveau nécessaire à l'amorçage du siphon.

2. Appareil selon la revendication 1, dans lequel le tube à siphon présente des dimensions telles que l'eau chaude après son expulsion sur les feuilles de thé, soit maintenue dans le dispositif de rétention de façon à "infuser" pendant au moins une minute.

3. Appareil selon la revendication 1 ou 2, dans lequel le tube à siphon a son orifice d'entrée situé sous, mais au voisinage immédiat de, la surface intérieure du lit de feuilles de thé et au voisinage du fond du dispositif de rétention, le tube se prolongeant vers le haut jusqu'à une position proche de la partie supérieure d'un lit normal de feuilles maintenues sur le panier puis s'incurvant redescendant de façon à ce que son orifice de sortie se situe sous son orifice d'entrée.

4. Appareil selon l'une quelconque des revendications précédentes, dans lequel le diamètre du tube à siphon est choisi par rapport à celui de l'orifice d'entrée d'eau de façon à ce que le débit de sortie du dispositif de rétention soit supérieur au débit d'entrée.

5. Appareil selon l'une quelconque des revendications précédentes, dans lequel la surface intérieure rugueuse du tube à siphon est produite par sablage, attaque à l'acide, ou par un procédé de ce type.

6. Appareil selon l'une quelconque des revendications précédentes, dans lequel un récipient extérieur est prévu pour entourer le dispositif de rétention qui entoure lui-même le lit de feuilles de thé, pour produire une double isolation thermique et minimiser le refroidissement des feuilles du lit de thé lors de l'infusion.

7. Appareil selon la revendication 6, dans lequel le tube à siphon est disposé entre le réceptacle retenant le liquide infusé chaud avant son évacuation, et le récipient extérieur, de façon à ce que le liquide ne se refroidisse pas excessivement lors de son évacuation par le tube à siphon, le tube étant chauffé dans une certaine mesure par le liquide chaud se trouvant dans le réceptacle et la chaleur étant conservée du fait de l'effet de double isolation entre le réceptacle et le récipient extérieur.
